# EUROPÄISCHE PATENTSCHRIFT

(11) **EP 0 974 048 B1**
(45) Veröffentlichungstag und Bekanntmachung des Hinweises auf die Patenterteilung: **29.06.2005**
(21) Anmeldenummer: 98928127.4
(22) Anmeldetag: 03.04.1998
(51) Int. Cl.: G01N 21/88, G02B 23/24

(54) **VORRICHTUNG ZUM OPTISCHEN PRÜFEN VON OBERFLÄCHEN**
DEVICE FOR OPTICALLY TESTING SURFACES
DISPOSITIF DE CONTROLE OPTIQUE DE SURFACES

(30) Priorität: 07.04.1997 DE 19714202
(43) Veröffentlichungstag der Anmeldung: 26.01.2000
(73) Patentinhaber: ROBERT BOSCH GMBH, 70442 Stuttgart (DE)
(72) Erfinder: DRABAREK, Pawel, D-75233 Tiefenbronn (DE); OFEN, Rolf, D-96173 Oberhaid (DE); KUEHNLE, Goetz, D-71282 Hemmingen (DE)
(86) Internationale Anmeldenummer: PCT/DE1998/000950
(87) Internationale Veröffentlichungsnummer: WO 1998/045689

(56) Entgegenhaltungen:
- EP-A- 0 267 705
- DE-A- 4 206 609
- GB-A- 2 126 715
- US-A- 5 381 225
- PATENT ABSTRACTS OF JAPAN vol. 008, no. 079 (P-267), 11. April 1984 & JP 58 223113 A (KOA:KK), 24. Dezember 1983

## Beschreibung

### Stand der Technik

Die Erfindung besieht sich auf eine Vorrichtung zum optischen Prüfen von Oberflächen.

Eine Vorrichtung dieser Art ist in der EP 0 267 705 A2 angegeben. Bei dieser bekannten Vorrichtung zum optischen Prüfen von Oberflächen ist eine Strahlungserzeugungseinrichtung mit zwei Lasern vorgesehen, von denen der eine eine Strahlung mit einer Wellenlänge von 633 nm und der andere eine Infrarotstrahlung mit einer Wellenlänge von 820 nm abgibt. In einem Strahlvereiniger werden die beiden Strahlen zu einer gemeinsamen Strahlung zusammengeführt und anschließend wieder in einem Strahlteiler getrennt. In der Folge werden beide Strahlen auf die gleiche Stelle einer Objektoberfläche gerichtet. Die von dieser Stelle der Objektoberfläche reflektierte Messstrahlung wird als eine gemeinsame Ausgangsstrahlung über ein drehbares Dove-Prisma geführt und wieder in die beiden Messstrahlen aufgeteilt, um danach auf eine zugeordnete Empfängerfläche zu gelangen, deren Signale in einer Messeinrichtung ausgewertet werden.

Eine in der US-A 5,381,225 angegebene weitere Vorrichtung zum optischen Prüfen von Oberflächen zeigt einen Aufbau, mit dem zwei getrennte Oberflächenbereiche mittels zweier Messstrahlungen untersucht werden, wobei die reflektierten Messstrahlen getrennt verschiedenen Empfängern zugeführt werden.

Aus der DE 32 32 904 ist eine Vorrichtung bekannt, bei der auf eine zu prüfende Oberfläche innerhalb einer Bohrung eines Werkstückes eine Laserstrahlung gerichtet und in die von der Oberfläche zurückgeworfene Strahlung in Abhängigkeit von der Oberflächenbeschaffenheit verändert ist. Eine Eingangsstrahlung wird von einem zentralen Lichtleiter auf einen Spiegel geführt, der die Eingangsstrahlung um näherungsweise 90° auf die Wandung der Bohrung ablenkt. Die von der Oberfläche zurückgeworfene Strahlung wird einerseits vom zentralen Lichtleiter und andererseits von konzentrisch um den zentralen Lichtleiter herum angeordneten weiteren Lichtleitern aus der Bohrung herausgeführt. Zwischen dem zentralen Lichtleiter und den weiteren Lichtleitern ist eine optische Totzone vorgesehen. Die vorbekannte Vorrichtung ermöglicht somit auf einfache Weise eine gleichzeitige Messung sowohl im Hell- als auch im Dunkelfeld der von der Oberfläche zurückgeworfenen Strahlung.

Der Erfindung liegt die Aufgabe zugrunde, eine Vorrichtung zum optischen Prüfen von Oberflächen anzugeben, die einfach aufgebaut ist.

Die Aufgabe wird durch die im unabhängigen Anspruch angegebenen Merkmale gelöst.

### Vorteile der Erfindung

Die erfindungsgemäße Vorrichtung weist den Vorteil auf, dass gleichzeitig eine erste und wenigstens eine zweite Oberfläche überprüfbar sind. Neben der einzelnen Ermittlung von Messergebnissen ist somit eine vergleichende Messung zwischen den beiden zu prüfenden Oberflächen möglich, ohne dass die Vorrichtung hierzu bewegt werden muss.

Bei der erfindungsgemäßen Vorrichtung ist also vorgesehen, dass ein Strahlteiler aus einer Eingangsstrahlung eine auf die erste zu prüfende Oberfläche gerichtete erste Messstrahlung und eine auf die zweite zu prüfende Oberfläche gerichtete zweite Messstrahlung auskoppelt. Die von den Oberflächen zurückgeworfenen Messstrahlungen werden im Strahlteiler wieder zu einer Ausgangsstrahlung zusammengeführt, die auf eine Messeinrichtung geführt ist, welche eine getrennte Auswertung der beiden Messstrahlungen vornimmt. Erfindungswesentlich ist auch, dass die beiden Messstrahlungen unterschiedliche Eigenschaften aufweisen, die eine getrennte Auswertung in der Messeinrichtung ermöglichen.

Die erfindungsgemäße Vorrichtung ist insbesondere geeignet zur Prüfung von Oberflächen in Bohrungen, insbesondere in Sacklochbohrungen. Der einfache Aufbau der erfindungsgemäßen Vorrichtung ermöglicht das Prüfen von Oberflächen in Bohrungen mit geringem Bohrungsdurchmesser. Eine getrennte Auswertung der in der Ausgangsstrahlung enthaltenen zurückgeworfenen Meßstrahlungen ermöglicht beispielsweise die Ermittlung der Geradheit oder der Rundheit der Bohrung. Da die Meßergebnisse von beiden Oberflächen auch gleichzeitig vorliegen, kann beispielsweise die Fluchtung der Bohrung ermittelt werden.

Vorteilhafte Ausgestaltungen und Weiterbildungen der erfindungsgemäßen Vorrichtung ergeben sich aus abhängigen Ansprüchen.

Eine erste Ausgestaltung sieht vor, daß als Eigenschaften der Meßstrahlungen unterschiedliche Polarisationsebenen vorgesehen sind.

Vorzugsweise werden die unterschiedlichen Polarisationsebenen durch die Ausgestaltung des Strahlteilers als Polarisationsstrahlteiler erzielt. Als Eingangsstrahlung ist beispielsweise eine unpolarisierte oder eine zirkular polarisierte Strahlung geeignet. Anstelle des Polarisationsstrahlteilers ist auch ein herkömmlicher Strahlteiler einsetzbar, dem in den Strahlengängen der beiden Meßstrahlungen jeweils Polarisationsfilter nachgeschaltet sind.

Eine Weiterbildung sieht vor, daß bereits die Eingangsstrahlung in einer vorgegebenen Polarisationsebene polarisiert ist. Durch Ändern der Polarisationsebene, beispielsweise mit einem Polarisationsdreher, ist eine zeitlich versetzte Prüfung der beiden Oberflächen möglich. Die Meßeinrichtung kann bei dieser Weiterbildung besonders einfach realisiert werden, da die Ausgangsstrahlung entweder der ersten oder der zweiten zurückgeworfenen Meßstrahlung entspricht. Ein Signal, das den Polarisationsdreher steuert, übernimmt in der Meßeinrichtung die Zuordnung des erfaßten Signals zur jeweils zurückgeworfenen Meßsstrahlung.

Eine andere Ausgestaltung sieht vor, daß die unterschiedlichen Eigenschaften der Meßstrahlungen mit unterschiedlichen Wellenlängen vorgegeben werden. Die Eingangsstrahlung enthält zwei Strahlungsanteile mit unterschiedlichen Wellenlängen, wobei im Strahlengang der ersten und der zweiten Meßstrahlung jeweils wellenlängenselektive Filter angeordnet sind. Sofern die Eingangsstrahlung gleichzeitig beide Strahlungsanteile enthält, können in der Meßeinrichtung mit entsprechenden wellenlängenselektiven Filtern gleichzeitig die zurückgeworfenen Meßstrahlungen erfaßt werden. Sofern die Eingangsstrahlung zeitlich nacheinander unterschiedliche Wellenlängen aufweist, reicht eine Meßeinrichtung aus, welche die Ausgangsstrahlung unabhängig von der Wellenlänge erfaßt.

Eine vorteilhafte Weiterbildung sieht vor, daß der Strahlteiler die erste Meßstrahlung in einem Winkel von wenigstens näherungsweise 90 ° gegenüber der Richtung der Eingangsstrahlung auskoppelt und die zweite Meßstrahlung im wesentlichen ohne Richtungsänderung passieren läßt.

Eine vorteilhafte andere Weiterbildung sieht vor, daß im Strahlengang der zweiten Meßstrahlung ein Strahlablenker angeordnet ist, der den Strahlengang in eine andere Richtung ablenkt. Sofern die Richtungsänderung wenigstens näherungsweise 90 ° beträgt, können sich die beiden zu prüfenden Oberflächen in einer Ebene befinden. Es ist somit möglich, eine Bohrung gleichzeitig an unterschiedlichen Bohrtiefen zu beurteilen.

Weitere vorteilhafte Weiterbildungen und Ausgestaltungen der erfindungsgemäßen Vorrichtung ergeben sich aus weiteren abhängigen Ansprüchen und aus der folgenden Beschreibung.

### Zeichnung

Die beiden Figuren zeigen unterschiedliche Ausgestaltungen einer Vorrichtung zum Prüfen von Oberflächen.

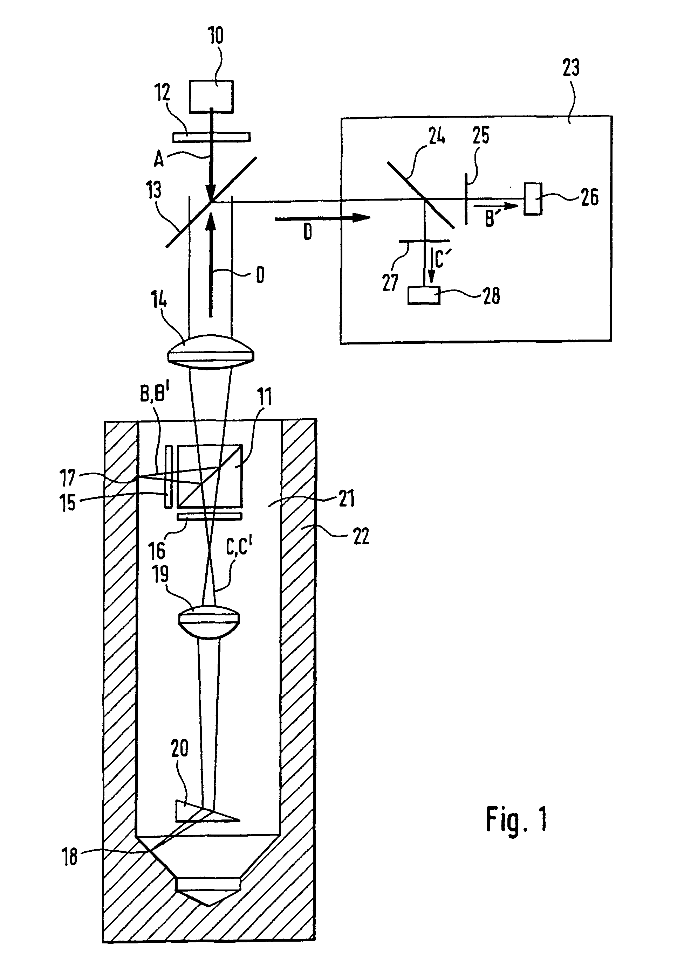

In Figur 1 ist eine Strahlungsquelle 10 gezeigt, die eine Eingangsstrahlung A in Richtung auf einen Strahlteiler 11 abgibt. Im Strahlengang zwischen der Strahlungsquelle 10 und dem Strahlteiler 11 sind ein Polarisationsdreher 12, ein erster halbdurchlässiger Spiegel 13 sowie eine erste Linse 14 angeordnet. Der Strahlteiler 11 koppelt aus der Eingangsstrahlung A eine erste Meßstrahlung B sowie eine zweite Meßstrahlung C aus. Im Strahlengang der ersten Meßstrahlung B ist ein erster Polarisator 15 und im Strahlengang der zweiten Meßstrahlung C ein zweiter Polarisator 16 angeordnet. Die erste Meßstrahlung B trifft auf eine erste zu prüfende Oberfläche 17 und die zweite Meßstrahlung C trifft auf eine zweite zu prüfende Oberfläche 18. Im Strahlengang der zweiten Meßstrahlung C sind eine zweite Linse 19 sowie ein Strahlumlenker 20 angeordnet. Die zu prüfenden Oberflächen 17, 18 sind im gezeigten Ausführungsbeispiel Oberflächenteile einer Bohrung 21 in einem Werkstück 22. Die von den zu prüfenden Oberflächen 17, 18 zurückgeworfenen Meßstrahlungen B', C' vereinigt der Strahlteiler 11 zu einer Ausgangsstrahlung D, die der erste halbdurchlässige Spiegel 13 zu einer optischen Empfangseinrichtung 23 hin auskoppelt.

Die optische Empfangseinrichtung 23 enthält einen zweiten halbdurchlässigen Spiegel 24, der aus der Ausgangsstrahlung D die zurückgeworfene erste Meßstrahlung B' und die zurückgeworfene zweite Meßstrahlung C' auskoppelt. Die zurückgeworfene erste Meßstrahlung B' durchläuft einen dritten Polarisator 25 und trifft auf einen ersten Strahlungsempfänger 26. Die zurückgeworfene zweite Meßstrahlung C' gelangt nach Passieren eines vierten Polarisators 27 auf einen zweiten Stahlungsempänger 28.

Die erfindungsgemäße Vorrichtung gemäß Figur 1 arbeitet folgendermaßen:

Der Strahlteiler 11 koppelt aus der von der Strahlungsquelle 10 bereitgestellten Eingangsstrahlung A die erste und die zweite Meßstrahlung B, C aus. Die beiden Meßstrahlungen B, C weisen unterschiedliche Eigenschaften auf, die gemäß dem Ausführungsbeispiel nach Figur 1 unterschiedliche Polarisationsebenen aufweisen. In Abhängigkeit von den Brechungsindizes der im Strahlteiler 11 verwendeten Materialien und in Abhängigkeit von den Winkelbeziehungen tritt bereits ohne weitere Maßnahmen eine Polarisierung auf. Eine vollständige Polarisierung wird dadurch erreicht, daß der Strahlteiler 11 als Polarisationsstrahlteiler realisiert ist. Eine andere Maßnahme sieht vor, daß in den Strahlengängen der beiden Meßstrahlungen B, C Polarisatoren 15, 16 angeordnet sind.

Die erste Linse 14, die im Strahlengang der Eingangsstrahlung A angeordnet ist, ermöglicht eine Fokussierung der ersten Meßstrahlung B auf die erste zu prüfende Oberfläche 17. Mittels der zweiten Linse 19, die im Strahlengang der zweiten Meßstrahlung C angeordnet ist, wird auch eine Fokussierung der zweiten Meßstrahlung C auf die zweite zu prüfende Oberfläche 18 ermöglicht.

Im gezeigten Ausführungsbeispiel koppelt der Strahlteiler 11 die erste Meßsstrahlung B in einem Winkel von wenigstens näherungsweise 90 ° bezogen auf die Richtung der Eingangsstrahlung A aus der Eingangsstrahlung A aus, während die zweite Meßstrahlung C in Richtung der Eingangsstrahlung A liegt. Der Strahlablenker 20 ermöglicht eine weitere Ablenkung der zweiten Meßstrahlung C, wobei auch eine Ablenkung um wenigstens näherungsweise 90 ° vorgesehen sein kann, so daß die beiden Meßstrahlungen B, C zueinander etwa parallel laufen. Mit dieser Maßnahme sind die zu prüfenden Oberflächen 17, 18 in Bohrungsrichtung voneinander beabstandet und können in der gleichen Ebene liegen, so daß beispielsweise die Fluchtung der Bohrung gemessen werden kann. Im gezeigten Ausführungsbeispiel lenkt der Strahlablenker 20 die zweite Meßstrahlung C um einen Winkel von näherungsweise 45 ° ab, so daß Oberflächen geprüft werden können, die nicht in einer Ebene liegen.

Die auf die zu prüfenden Oberflächen 17, 18 treffenden Meßstrahlungen B, C werden in Abhängigkeit von der Oberflächenbeschaffenheit teilweise reflektiert und teilweise gestreut. Stets tritt ein Anteil an zurückgeworfener Meßstrahlung B', C' auf, der die entgegengesetzte Richtung wie die einfallende Meßstrahlung B, C aufweist. Die zurückgeworfenen Meßstrahlungen B', C' vereinigt der Strahlteiler 11 zur Ausgangsstrahlung D.

Der erste halbdurchlässige Spiegel 13 koppelt die Ausgangsstrahlung D aus und leitet sie der optischen Empfangseinrichtung 23 zu. In einer einfachsten Ausführungsform enthält die optische Empfangseinrichtung 23 lediglich den ersten Strahlungsempfänger 26, der die Ausgangsstrahlung D erfaßt. Diese einfache Ausgestaltung der optischen Empfangseinrichtung 23 ist möglich, sofern die beiden Meßstrahlungen B, C die unterschiedlichen Eigenschaften zeitlich nacheinander aufweisen. Eine solche Realisierung ist dadurch möglich, daß die von der Strahlungsquelle 10 abgegebene Strahlung mittels des Polarisationsdrehers 12 in beliebige Ebenen polarisiert wird. Da die Eingangsstrahlung A bereits polarisiert ist, kann der Strahlteiler 11 nur jeweils diejenige Meßstrahlung B, C auskoppeln, die die richtige Polarisierung bereits aufweist. Durch Drehen der Polarisationsebene ist es möglich, ausschließlich die erste Meßsstrahlung B oder ausschließlich die zweite Meßstrahlung C bereitzustellen. Durch Drehen der Polarisationsebene ist es aber auch möglich, ein beliebiges Verhältnis von gleichzeitig auftretenden Meßstrahlungen B, C bereitzustellen. Wenn die Information über die Polarisierung der Eingangsstrahlung A bekannt ist, kann das Signal, das der einzige Strahlungsempfänger abgibt, jeweils den zu prüfenden Oberflächen 17, 18 eindeutig zugeordnet werden.

Die in Figur 1 gezeigte Weiterbildung der optischen Meßeinrichtung 23 ermöglicht ein gleichzeitiges Erfassen der zurückgeworfenen Meßstrahlungen B', C'. Der zweite halbdurchlässige Spiegel 24 teilt die Ausgangsstrahlung D in zwei Teilstrahlen auf. Den beiden Teilstrahlen sind Polarisatoren 25, 27 angeordnet, die aus der Ausgangsstrahlung D die gewünschten zurückgeworfenen Meßstrahlungen B', C' auskoppeln. Der halbdurchlässige Spiegel 24 und die beiden Polarisatoren 25, 27 können ersetzt werden durch einen Polarisationsstrahlteiler. Die zurückgeworfenen Meßstrahlungen B', C' werden von dem ersten und zweiten Strahlungsempfänger 26, 28 separat empfangen und als Ausgangssignal zur Verfügung gestellt. Die von den beiden Strahlungsempfängern 26, 28 bereitgestellten Signale werden einer nicht näher gezeigten weiteren Auswerteschaltung zugeführt, die entweder aus den einzelnen Signalen oder aus Verknüpfungen beider Signale Meßergebnisse bereitstellt, die auf die Beschaffenheit der zu prüfenden Oberflächen 17, 18 Rückschlüsse zulassen. Detaillierte Angaben, welche Informationen über die Oberfläche erhalten werden, können dem eingangs genannten Stand der Technik entnommen werden.

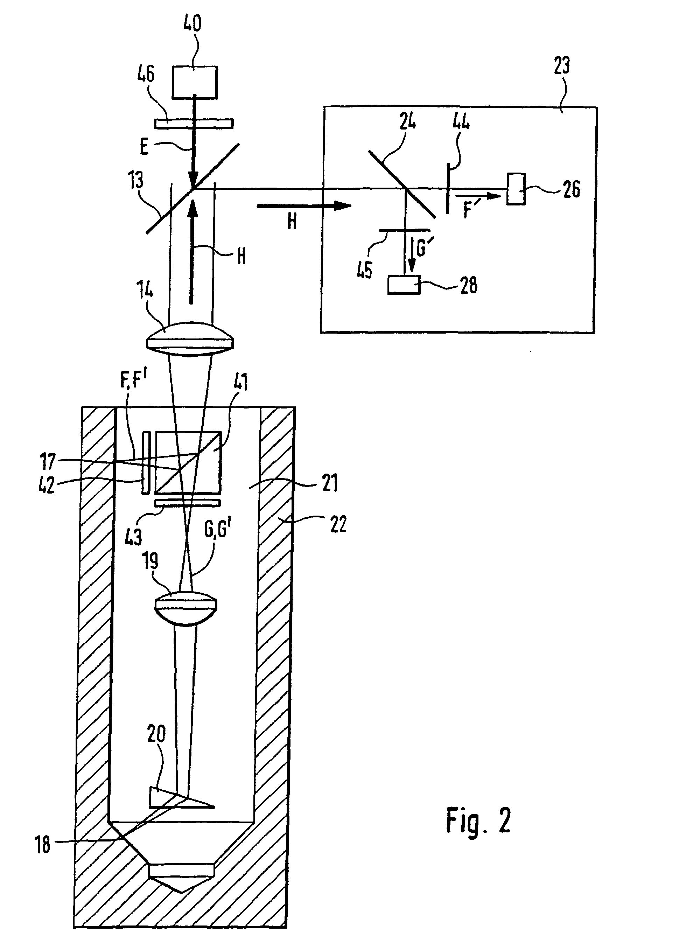

Figur 2 zeigt ein anderes Ausführungsbeispiel der erfindungsgemäßen Vorrichtung zum Prüfen von Oberflächen. Diejenigen in Figur 2 gezeigten Teile, die mit den in Figur 1 gezeigten Teilen übereinstimmen, tragen dieselben Bezugszeichen.

Aus der von einer Strahlungsquelle 40 bereitgestellten Eingangsstrahlung E koppelt ein Strahlteiler 41 eine erste Meßstrahlung F sowie eine zweite Meßstrahlung G aus. Im Strahlengang der ersten Meßstrahlung F ist eine erstes wellenlängenselektives Filter 42 und im Strahlengang der zweiten Meßstrahlung G ein zweites wellenlängenselektives Filter 43 angeordnet.

Die von den zu prüfenden Oberflächen 17, 18 zurückgeworfenen Meßstrahlungen F', G' vereinigt der Strahlteiler 41 zur Ausgangsstrahlung H.

Die optische Empfangseinrichtung 23 enthält den zweiten halbdurchlässigen Spielgel 24, der die Ausgangsstrahlung H in zwei Teilstrahlen aufteilt. Im ersten Teilstrahl soll die erste zurückgeworfene Meßstrahlung F' auftreten, die ein drittes wellenlängenselektives Filter 44 aus der Ausgangsstrahlung H herausfiltert. Im anderen Strahlengang soll die zweite zurückgeworfene Meßstrahlung G' auftreten, die ein viertes wellenlängenselektives Filter 45 aus der Ausgangsstrahlung H auskoppelt.

Im Strahlengang der Eingangsstrahlung E ist eine selektive Filterbank 46 angeordnet.

Die in Figur 2 gezeigte Vorrichtung arbeitet folgendermaßen:

Der wesentliche Unterschied zwischen den in Figur 1 und Figur 2 gezeigten Ausführungsbeispielen der erfindungsgemäßen Vorrichtung liegt darin, daß anstelle der Polarisationsebene, die in den beiden Meßstrahlungen B, C die unterschiedlichen Eigenschaften festlegt, nunmehr die unterschiedlichen Eigenschaften durch unterschiedliche Wellenlängen der beiden Meßstrahlungen F, G festgelegt sind. Auf die polarisierenden Eigenschaften des in Figur 1 gezeigten Strahlteilers 11 kommt es bei dem in Figur 2 gezeigten Strahlteiler 41 nicht an . Der Strahlteiler 41 hat nur die Aufgabe, aus der Eingangsstrahlung E Strahlungsanteile auszukoppeln.

Die Wellenlängenselektion erfolgt in der ersten Meßstrahlung F durch das erste wellenlängenselektive Filter 42 und in der zweiten Meßstrahlung G durch das dort angeordnete zweite wellenlängenselektive Filter 43. Wie bei der anhand von Figur 1 erläuterten Ausführung der erfindungsgemäßen Vorrichtung ist es auch bei der Ausführung gemäß Figur 2 möglich, daß die Strahlungsquelle 40 die Eingangsstrahlung E derart bereitstellt, daß gleichzeitig beide unterschiedliche Eigenschaften in den beiden Meßstrahlungen F, G enthalten sind. Im vorliegenden Fall enthält dann die Eingangsstrahlung E Strahlungsanteile mit beiden Wellenlängen, auf welche die beiden wellenlängenselektiven Filter 42, 43 abgestimmt sind. Ebenso ist es wieder möglich, daß die Eingangsstrahlung E die unterschiedliche Eigenschaft in zeitlicher Folge aufweist. Zur Realisierung ist beispielsweise die in Figur 2 gezeigte selektive Filterbank 46 vorgesehen, die durch Umschalten dafür sorgt, daß die Eingangsstrahlung E jeweils nur eine vorbestimmte Wellenlänge aufweist. Entsprechendes gilt für die optische Empfangseinrichtung 23, die im Falle einer zeitlichen Folge von unterschiedlichen Wellenlängen in der Ausgangsstrahlung H lediglich einen Strahlungsempfänger aufweisen muß, wobei wellenlängenselektive Filter nicht erforderlich sind. Sofern die gleichzeitige Auswertung der beiden zurückgeworfenen Meßstrahlungen F', G' erforderlich ist, muß eine Trennung nach unterschiedlichen Wellenlängen vorgenommen werden. Das in der optischen Empfangseinrichtung 23 enthaltene dritte wellenlängenselektive Filter koppelt die erste zurückgeworfene Meßstrahlung F' und das vierte wellenlängenselektive Filter 45 die zweite zurückgeworfene Meßstrahlung G aus.

Die beiden zurückgeworfenen Meßstrahlungen F', G' werden von den beiden Strahlungsempfängern 26, 28 in Signale umgesetzt, die in der bereits beschriebenen Weise weiterverarbeitet werden.

## Patentansprüche

1. Vorrichtung zum optischen Prüfen von Oberflächen (17, 18) mit
- einer Strahlungsquelle (10) zum Abgeben einer Eingangsstrahlung (A, E);
- einem Strahlteiler (11, 41) zum Aufteilen der Eingangsstrahlung (A, E) und Auskoppeln einer auf eine erste zu prüfende Oberfläche (17) gerichteten ersten Messstrahlung (B, F) und einer auf eine von der ersten Oberfläche (17) verschiedene zweite Oberfläche (18) gerichteten zweiten Messstrahlung (C, G), die eine getrennte Auswertung ermöglichende unterschiedliche Eigenschaften aufweisen und in Abhängigkeit von der Oberflächenbeschaffenheit der zu prüfenden Oberflächen (17, 18) veränderte zurückgeworfene Messstrahlungen (B', F', C', G') bilden, und zum Zusammenführen der von den zu prüfenden Oberflächen (17,18) zurückgeworfenen Messtrahlungen (B',F',C',G') zu einer Ausgansstrahlung (D,H); und
- einer optischen Messeinrichtung (23), auf die die aus den von der zu prüfenden Oberflächenanordnung (17, 18) zurückgeworfenen Messstrahlungen bestehende Ausgangsstrahlung geführt ist und mit der die beiden Messstrahlungen (B', F'; C', G') getrennt auswertbar sind.

2. Vorrichtung nach Anspruch 1,
**dadurch gekennzeichnet,**
**dass** der Strahlteiler (11) ein Polarisationsstrahlteiler ist, der die unterschiedlichen Eigenschaften der beiden Messstrahlungen (B, C) durch unterschiedliche Polarisationsebenen realisiert.

3. Vorrichtung nach Anspruch 1,
**dadurch gekennzeichnet,**
**dass** zwischen dem Strahlteiler (11) und der ersten zu prüfenden Oberfläche (17) ein erstes Polarisationsfilter (15) und zwischen dem Strahlteiler (11) und der zweiten zu prüfenden Oberfläche (18) ein zweites Polarisationsfilter (16) angeordnet ist, so dass die unterschiedlichen Eigenschaften der beiden Messstrahlungen (B, C) durch unterschiedliche Polarisationsebenen realisiert sind.

4. Vorrichtung nach einem der vorhergehenden Ansprüche,
**dadurch gekennzeichnet,**
**dass** sie zum Bereitstellen einer polarisierten Eingangsstrahlung (A) ausgebildet ist.

5. Vorrichtung nach Anspruch 1,
**dadurch gekennzeichnet,**
**dass** Mittel zum Realisieren der unterschiedlichen Eigenschaften der beiden Messstrahlungen (F, G) durch unterschiedliche Wellenlängen der Eingangsstrahlung (E) vorhanden sind.

6. Vorrichtung nach einem der vorhergehenden Ansprüche,
**dadurch gekennzeichnet,**
**dass** der Strahlteiler (11, 41) zum Ablenken der ersten Messstrahlung (B, F) unter einem Winkel von wenigstens näherungsweise 90° gegenüber der Eingangsstrahlung (A, E) und zum Weiterleiten der zweiten Messstrahlung (C, G) im Wesentlichen in Richtung der Eingangsstrahlung (A, E) ausgebildet ist.

7. Vorrichtung nach einem der vorhergehenden Ansprüche,
**dadurch gekennzeichnet,**
**dass** in dem Strahlengang der zweiten Messstrahlung (C, G) ein Strahlablenker (20) angeordnet ist.

8. Vorrichtung nach einem der vorhergehenden Ansprüche,
**dadurch gekennzeichnet,**
**dass** in dem Strahlengang der Eingangsstrahlung (A, E) eine erste Linse (14) und in dem Strahlengang der zweiten Messstrahlung (C, G) eine zweite Linse (19) angeordnet ist.

9. Vorrichtung nach einem der Ansprüche 1 bis 4 und 6 bis 8,
**dadurch gekennzeichnet,**
**dass** in der optischen Messeinrichtung (23) ein Polarisationsstrahlteiler zum Trennen der ersten und der zweiten zurückgeworfenen Messstrahlung (B', C', F', G') aus der Ausgangsstrahlung (D) vorgesehen ist.

10. Vorrichtung nach einem der Ansprüche 1 bis 4 und 6 bis 8,
**dadurch gekennzeichnet,**
**dass** in der optischen Messeinrichtung (23) ein Polarisator (25) zum Auskoppeln der ersten zurückgeworfenen Messstrahlung (B') und ein Polarisator (27) zum Auskoppeln der zweiten zurückgeworfenen Messstrahlung (C') aus der Ausgangsstrahlung (D) vorgesehen sind.

11. Vorrichtung nach einem der Ansprüche 5 bis 8,
**dadurch gekennzeichnet,**
**dass** in der optischen Messeinrichtung (23) ein wellenlängenselektives Filter (44) zum Auskoppeln der ersten zurückgeworfenen Messstrahlung (F') und ein wellenlängenselektives Filter (45) zum Auskoppeln der zweiten zurückgeworfenen Messstrahlung (G') aus der Ausgangsstrahlung (H) vorgesehen sind.

## Claims

1. Apparatus for optically testing surfaces (17, 18), having
- a radiation source (10) for emitting an input beam (A, E);
- a beam splitter (11, 41) for splitting the input beam (A, E) and coupling out a first measuring beam (B, F) directed onto a first surface (17) to be tested, and for coupling out a second measuring beam (C, G), which is directed onto a second surface (18) different from the first surface (17), which have different properties permitting a separate evaluation and form retroreflected measuring beams (B', F', C', G') modified as a function of the nature of the surfaces (17, 18) to be tested, and for combining the measuring beams (B', F', C, G') retroreflected by the surfaces (17, 18) to be tested in order to form an output beam (D, H); and
- an optical measuring device (23) onto which the output beam consisting of the measuring beams retroreflected by the surface arrangement (17, 18) to be tested is guided and with the aid of which the two measuring beams (B', F'; C', G') can be evaluated separately.

2. Apparatus according to Claim 1,
**characterized in that**
the beam splitter (11) is a polarization beam splitter which realizes the different properties of the two measuring beams (B, C) by means of different polarization planes.

3. Apparatus according to Claim 1,
**characterized in that**
a first polarization filter (15) is arranged between the beam splitter (11) and the first surface (17) to be tested, and a second polarization filter (16) is arranged between the beam splitter (11) and the second surface (18) to be tested, such that the different properties of the two measuring beams (B, C) are realized by different polarization planes.

4. Apparatus according to one of the preceding claims,
**characterized in that**
it is designed to provide a polarized input beam (A).

5. Apparatus according to Claim 1,
**characterized in that**
means are present for realizing the different properties of the two measuring beams (F, G) by means of different wavelengths of the input beam (E).

6. Apparatus according to one of the preceding
claims,
**characterized in that**
the beam splitter (11, 41) is designed to deflect the first measuring beam (B, F) at an angle of at least approximately 90° to the input beam (A, E), and to pass on the second measuring beam (C, G) substantially in the direction of the input beam (A, E).

7. Apparatus according to one of the preceding
claims,
**characterized in that**
a beam deflector (20) is arranged in the beam path of the second measuring beam (C, G).

8. Apparatus according to one of the preceding claims,
**characterized in that**
a first lens (14) is arranged in the beam path of the input beam (A, E), and a second lens (19) is arranged in the beam path of the second measuring beam (C, G).

9. Apparatus according to one of Claims 1 to 4 and 6 to 8,
**characterized in that**
a polarization beam splitter for separating the first and the second retroreflected measuring beams (B', C', F', G') from the output beam (D) is provided in the optical measuring device (23).

10. Apparatus according to one of Claims 1 to 4 and 6 to 8,
**characterized in that**
a polarizer (25) for coupling out the first retroreflected measuring beam (B') from the output beam (D) and a polarizer (27) for coupling out the second retroreflected measuring beam (C') from the output beam (D) are provided in the optical measuring device (23).

11. Apparatus according to one of Claims 5 to 8,
**characterized in that**
a wavelength-selective filter (44) for coupling out the first retroreflected measuring beam (F') from the output beam (H), and a wavelength-selective filter (45) for coupling out the second retroreflected measuring beam (G') from the output beam (H) are provided in the optical measuring device (23).

## Revendications

1. Dispositif de contrôle optique de surfaces (17, 18) comprenant :
- une source de rayonnement (10) pour générer un rayonnement d'entrée (A, E),
- un diviseur de faisceau (11, 41) pour diviser le rayonnement d'entrée (A, E) et découpler un premier rayonnement de mesure (B, F) dirigé vers une surface à contrôler (17) et un second rayonnement de mesure (C, G), dirigé vers une seconde surface (18) différente de la première surface (17),
les rayonnements (C, G) ayant des propriétés différentes permettant une exploitation séparée et formant des rayonnements de mesure réfléchis modifiés (B', F', C', G') en fonction des caractéristiques de surface de la surface à vérifier (17, 18),
et pour regrouper les rayonnements de mesure (B', F', C', G') renvoyés par les surfaces à mesurer (17, 18) en un rayonnement de sortie (D, H), et
- une installation de mesure optique (23) recevant le rayonnement de sortie formé par les rayonnements de mesure réfléchis par les surfaces (17, 18) à contrôler, et qui exploite séparément les deux rayonnements de mesure (B', F', C', G').

2. Dispositif selon la revendication 1,
**caractérisé en ce que**
le diviseur à faisceau (11) est un diviseur de faisceau à polarisation qui réalise les propriétés différentes des deux rayonnements de mesure (B, C) par des plans de polarisation différents.

3. Dispositif selon la revendication 1,
**caractérisé par**
un premier filtre à polarisation (15) prévu entre le diviseur de faisceau (11) et la première surface à vérifier (17), et un second filtre à polarisation (16) entre le diviseur de faisceau (11) et la seconde surface à vérifier (18), de façon à obtenir les propriétés différentes des deux rayonnements de mesure (B, C) grâce à des plans de polarisation différents.

4. Dispositif selon l'une des revendications précédentes,
**caractérisé en ce qu'**
il est conçu pour fournir un rayonnement d'entrée polarisant (A).

5. Dispositif selon la revendication 1,
**caractérisé par**
des moyens pour réaliser les propriétés différentes des deux rayonnements de mesure (F, G) par des longueurs d'ondes différentes de celles du rayonnement d'entrée (E).

6. Dispositif selon l'une des revendications précédentes,
**caractérisé en ce que**
le diviseur de faisceau (11, 41) est réalisé pour dévier le premier rayonnement de mesure (B, F) d'un angle d'au moins pratiquement 90° par rapport au rayonnement d'entrée (A, E), et pour transmettre le second rayonnement de mesure (C, G) principalement dans la direction du rayonnement d'entrée (A, E).

7. Dispositif selon l'une des revendications précédentes,
**caractérisé par**
un déflecteur de faisceau (20) installé dans le chemin de faisceaux du second rayonnement de mesure (C, G).

8. Dispositif selon l'une quelconque des revendications précédentes,
**caractérisé en ce qu'**
une première lentille (14) est installée dans le chemin du rayonnement d'entrée (A, E), et une seconde lentille (19) dans le chemin du second rayonnement de mesure (C, G).

9. Dispositif selon l'une des revendications 2 à 4 et 6 à 8,
**caractérisé en ce que**
l'installation de mesure optique (23) comporte un diviseur de faisceau de polarisation pour séparer un premier rayonnement de mesure (B', C', F', G') et un second rayonnement de mesure à partir du rayonnement de sortie (D).

10. Dispositif selon l'une des revendications 1 à 4 et 6 à 8,
**caractérisé en ce que**
l'installation de mesure optique (23) comporte un polarisateur (25) pour découpler le premier rayonnement de mesure réfléchi (B') et un polarisateur (27) pour découpler le second rayon de mesure réfléchi à partir du rayonnement de sortie (D).

11. Dispositif selon l'une des revendications 5 à 8,
**caractérisé par**
un filtre sélectif en longueur d'onde (44) installé dans l'installation de mesure optique (23) pour découpler le premier rayonnement de mesure réfléchi (F'), et par un second filtre sélectif en longueur d'onde (45) prévu pour découpler le second rayonnement de mesure réfléchi (G') à partir du rayonnement de sortie (H).
